# EUROPÄISCHE PATENTSCHRIFT

(11) **EP 3 601 008 B1**
(45) Veröffentlichungstag und Bekanntmachung des Hinweises auf die Patenterteilung: **30.06.2021**
(21) Anmeldenummer: 18724438.9
(22) Anmeldetag: 26.02.2018
(51) Int. Cl.: B61K 9/02, B61L 15/00

(54) **VORRICHTUNG ZUM MESSEN VON RADAUFSTANDSKRÄFTEN EINES SCHIENENFAHRZEUGS**
DEVICE FOR MEASURING WHEEL VERTICAL FORCES OF A RAIL VEHICLE
DISPOSITIF SERVANT À MESURER DES FORCES D'APPUI AU SOL D'UN VÉHICULE SUR RAILS

(30) Priorität: 30.03.2017 AT 502502017
(43) Veröffentlichungstag der Anmeldung: 05.02.2020
(73) Patentinhaber: PJ Messtechnik GmbH, 8020 Graz (AT)
(72) Erfinder: JOCH, Martin, 8045 Graz (AT); PETSCHNIG, Günter, 8042 Graz (AT); WALTENSDORFER, Herwig, 8010 Graz (AT)
(74) Vertreter: Margotti, Herwig Franz
(86) Internationale Anmeldenummer: PCT/AT2018/060051
(87) Internationale Veröffentlichungsnummer: WO 2018/176072

(56) Entgegenhaltungen:
- US-A1- 2007 152 107

## Beschreibung

Die Erfindung betrifft ein Schienenfahrzeug mit einer Vorrichtung zum Messen von Radaufstandskräften des Schienenfahrzeugs nach dem Oberbegriff des Anspruchs 1.

Schienenfahrzeuge werden im Allgemeinen vor deren Inverkehrbringung aufwändigen Typprüfungen unterzogen, bei denen auch an ausgewählten Radsätzen die Fahrdynamik der Schienenfahrzeuge überprüft wird, um sicherzustellen, dass die Schienenfahrzeuge unter allen zulässigen Zuständen sicher betrieben werden können. Dafür wird zum Beispiel ein Messradsatz verwendet, wie er aus der Druckschrift EP 2 439 508 A1 bekannt ist. Das Messprinzip beruht auf Dehnungsmessungen mittels Dehnungsmessgebern direkt auf Rädern der Radsätze. Da die Räder während der Messung rotieren, ist eine Übertragung von bei der Messung ermittelten Daten mittels Telemetrie erforderlich.

Bei der Messung nach obigem Prinzip werden nicht nur sehr genaue Werte für Radaufstandskräfte ermittelt, sondern es werden auch sehr genaue dynamische Messwerte und auch Informationen, die im Normalbetrieb nicht erforderlich sind, ermittelt. Infolgedessen und aufgrund der teuren und aufwendigen Messtechnik der Messradsätze wäre eine Messung nach diesem Prinzip über eine gesamte Fahrzeuglebensdauer nicht zweckmäßig. Ferner ist mit der besagten Messtechnik nicht vorgesehen die Radaufstandskräfte sämtlicher Radachsen zu ermitteln, da die Messtechnik nur an ausgewählten bzw. repräsentativen Radsätzen angebracht wird.

Im Patent EP 2 679 967 B1 wird eine Vorrichtung zur Messung und Anzeige eines Zuladegewichts eines Schienenfahrzeugs beschrieben. Aufgrund des beschriebenen Aufbaus der Vorrichtung ist es aber mit der Vorrichtung nicht möglich die einzelnen Radaufstandskräfte zu ermitteln.

Das Patent AT 276472 B offenbart eine Bremsregeleinrichtung für ein Schienenfahrzeug zur selbstständigen Regelung einer Bremskraft in Abhängigkeit von Radaufstandskräften. Das Schienenfahrzeug umfasst ein Untergestell und zumindest zwei Einzelachsen, wobei die zwei Einzelachsen mit dem Untergestell gekoppelt sind. Ein Federsystem einer Radachse weist zwei Blattfederpakete auf, die jeweils in Radnähe angeordnet sind und deren Enden über Schaken an Konsolen des Fahrgestells angelenkt sind. Die Bremsregeleinrichtung umfasst ferner zur Messung von Radaufstandskräften Dehnungsmessgeber und eine Auswerteeinheit, wobei die Dehnungsmessgeber mit der Auswerteeinheit verbunden sind und wobei pro Radachse ein Dehnungsmessgeber an einer Schake angebracht ist.

Bei der Messung der Radaufstandskräfte mit der aus dem Patent AT 276472 B bekannten Bremsregeleinrichtung hat sich aber als nachteilig erwiesen, dass durch die Applizierung der Dehnungsmessgeber auf den Schaken diese Dehnungsmessgeber aufgrund der Bewegung der Schaken bei einer Federbewegung der Radachse Schaden nehmen können. Insbesondere die Verkabelung von Dehnungsmessgebern stellt eine Schwachstelle dar, da es durch andauernde Bewegungen zu einem Knick oder einer plastischen Dehnung in den Kabeln kommen kann und infolgedessen eine Widerstandsänderung in den Kabeln auftritt, die das Messsignal verfälscht. Hierdurch ergeben sich häufige Wechselintervalle der Dehnungsmessgeber, wodurch für die bekannte Einrichtung ein hoher Wartungsaufwand nötig ist und die Verfügbarkeit sinkt.

Die Druckschrift EP 1 236 633 A2 offenbart ein Verfahren und eine Anlage zur Erkennung entgleister Zustände von Rädern eines Schienenfahrzeugs mit Hilfe eines Beschleunigungssensors. Dem Verfahren liegt ein aufwendiges Berechnungsmodell zu Grunde, mit dessen Hilfe eine hohe Aussagequalität über einen aktuellen Beschleunigungszustand der Räder des Schienenfahrzeugs ermittelt werden kann. Diese hohe Aussagequalität verursacht aber Kosten, welche üblicherweise vom Betreiber nicht getragen werden können. Derartige Anlagen kommen daher nur im hochpreisigen Segment sowie im fahrerlosen Betrieb zur Anwendung.

Die Druckschrift US 2007/0152107 A1 offenbart eine Vorrichtung zur Detektion von Schäden an einem Radsatz eines Schienenfahrzeugs.

Es ist daher die Aufgabe der vorliegenden Erfindung ein Schienenfahrzeug mit einer Vorrichtung zum Messen von Radaufstandskräften des Schienenfahrzeugs mit Dehnungsmessgebern bereitzustellen, die kostengünstig, einfach und robust ausgebildet ist und einen geringen Wartungsaufwand aufweist.

Erfindungsgemäß wird die vorliegende Erfindung durch ein Schienenfahrzeug mit einer Vorrichtung zum Messen von Radaufstandskräften des Schienenfahrzeugs gemäß dem kennzeichnenden Teil des Anspruchs 1 gelöst.

Durch das Applizieren der Dehnungsmessgeber an Elementen der Drehgestelle, die bei einer Federbewegung der Radachsen bewegungsfrei bleiben, ist der Vorteil erhalten, dass eine

Beschädigung der Dehnungsmessgeber aufgrund von Federbewegungen der Radachse vermieden wird.

Üblicherweise ist die Primärfederung über dem Achslagergehäuse des Radsatzes angeordnet, auf dieser Primärfederung ruht der Drehgestellrahmen (DG-Rahmen) als zentrale Strukturkomponente des gesamten Drehgestells. Zwischen DG-Rahmen und Wagenkasten-Untergestell ist die Sekundärfederung angeordnet, diese ermöglicht alle erforderlichen Relativbewegungen zwischen Drehgestell und Wagen. Zur Ermittlung der Radaufstandskräfte ist die erfindungsgemäß ideale Position für die Dehnmessgeber direkt an sensitiven Stellen des DG-Rahmens. Die Federbewegungen in der Primärstufe haben auf diesen Geber keinen negativen Einfluss, der Geber ist auf einer erhöhten Position angeordnet und damit vor Steinschlag geschützt, und die Länge der Verkabelung ist möglichst kurz gehalten.

Die Dehnungsmessgeber sind bevorzugt durch Widerstands-Dehnmessstreifen, durch piezoelektrische Aufnehmer und/oder induktive Messgeber gebildet.

Die Auswerteeinheit ist dazu ausgebildet, Messsignale der Dehnungsmessgeber in die einzelnen Radaufstandskräfte umzurechnen.

Vorteilhaft ist die Auswerteeinheit dazu ausgebildet, anhand von Messsignalen der Dehnungsmessgeber eine Abschätzung über eine Entgleisungssicherheit, Fahrzeugentgleisung und/oder Radschäden der Räder zu ermitteln. Hierdurch können durch einen Schienenfahrzeugführer oder eine andere Person Schäden frühzeitig erkannt werden und eine Unfallgefahr minimiert werden. Radschäden, wie zum Beispiel Polygonbildung oder Flachstellen an den Rädern, werden bevorzugt bei langsamer Fahrt durch die Auswerteeinheit ermittelt.

Darüber hinaus kann durch Messsignale der Dehnungsmessgeber ein Zustand der Gleise, insbesondere Gleisverwindungen, ermittelt werden und es kann die Schwerpunktslage des Gesamtfahrzeuges ermittelt werden, wodurch Schwerpunktsverschiebungen aufgrund verrutschender Ladung erkennbar sind und die Unfallgefahr noch weiter verringert werden kann.

Zweckmäßig ist die Auswerteeinheit mit einer visuellen und/oder akustischen Ausgabeeinheit gekoppelt, um die ermittelten Radaufstandskräfte permanent und/oder auf Abruf, eine detektierte Fahrzeugentgleisung, und/oder Radschäden bei plötzlichem Auftreten und/oder auf Abruf auszugeben. Eine visuelle Ausgabeeinheit ist zum Beispiel durch ein Display und/oder Warnlampen gebildet und eine akustische Ausgabeeinheit ist zum Beispiel durch einen Lautsprecher gebildet.

Zweckmäßig weist die Vorrichtung ein Dateninformationssystem auf, das mit der Auswerteeinheit gekoppelt ist. Das Dateninformationssystem greift die von der Auswerteeinheit ermittelten Daten ab, verarbeitet diese weiter, gibt sie aus und/oder übermittelt sie an eine Leitstelle oder eine Werkstatt. Infolgedessen besteht die Möglichkeit, das Schienenfahrzeug fern zu überwachen, wodurch eine Wartung des Schienenfahrzeugs optimiert werden kann und Kosten gesenkt werden können.

Das Schienenfahrzeug kann sowohl aus einem Wagen als auch aus mehreren gekoppelten Wagen bestehen. Bevorzugt ist pro Wagen eine Auswerteeinheit vorgesehen, wobei bei einem Schienenfahrzeug mit mehreren Wagen die Auswerteeinheiten der einzelnen Wagen mit dem Dateninformationssystem gekoppelt sind.

Weitere vorteilhafte Ausführungsvarianten der erfindungsgemäßen Vorrichtung werden in weiterer Folge anhand der Figuren näher erläutert.
Figur 1 zeigt eine Ausführungsvariante eines erfindungsgemäßen Wagens mit einer Vorrichtung, angebracht an dem Wagen mit zwei zweiachsigen Drehgestellen, in einer schematischen Seitenansicht.
Figur 2 zeigt einen schematischen Aufbau der Ausführungsvariante des erfindungsgemäßen Wagens nach Figur 1.

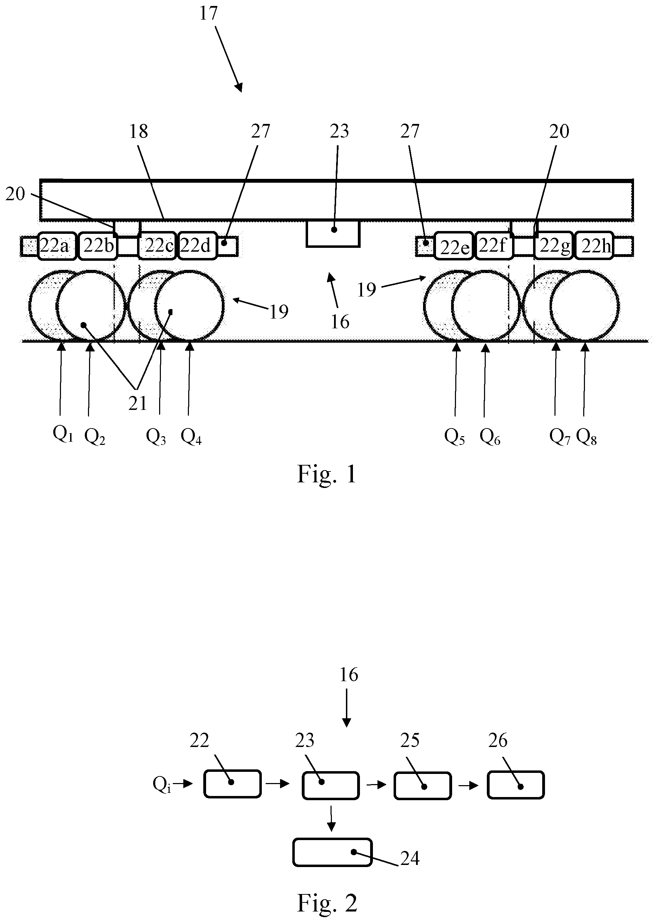

Figur 1 zeigt in einer schematischen Seitenansicht eine Ausführungsvariante einer Vorrichtung 16, die an einem durch einen Wagen 17 gebildeten Schienenfahrzeug angebracht ist.

Der Wagen 17 ist Teil eines Zuges, der mehrere miteinander gekoppelte Wagen 17 umfasst. Je ein Wagen 17 umfasst ein Untergestell 18 und zwei Drehgestelle 19, die mit dem Untergestell 18 über eine Sekundärfeder bzw. ein Drehelement 20 drehbar verbunden sind. Die Drehgestelle 19 weisen jeweils Drehgestellrahmen (DG-Rahmen) 27 und zwei über jeweilige Federsysteme gelagerte Radachsen mit jeweils zwei Rädern 21 auf. Die Federsysteme und die Radachsen sind der Einfachheit halber nicht dargestellt.

Die Primärfedern sind zwischen dem DG-Rahmen 27 und dem Achslagergehäuse des Radsatzes angeordnet. Die Primärfederung selber kann als Stahlfeder, Gummifeder oder Kombinationen davon ausgeführt sein. Der für die Ermittlung der Radaufstandskraft applizierte Dehnungsgeber ist an einer für das jeweilige Rad sensitiven Stelle am DG-Rahmen angeordnet. So ist z.B. der Dehnungsgeber 22a für die Radaufstandskraft Q1 sensitiv, der Geber 22b ist sensitiv für Q2 usw.

Die Vorrichtung 16 umfasst - in der Standardausführung mit zwei zweiachsigen Drehgestellen - pro Wagen 17 acht durch Dehnungsmessstreifen 22a-d gebildete Dehnungsmessgeber, eine Auswerteeinheit 23, eine Ausgabeeinheit 24 in Form eines Displays und eine Fernübertragungseinheit 25. Alle Wagen sind mit einem gemeinsamen Dateninformationssystem 26 gekoppelt, das mit sämtlichen Auswerteeinheiten 23 über die Fernübertragungseinheiten 25 verbunden ist. Die Ausgabeeinheit 24, die Fernübertragungseinheit 25 und das Dateninformationssystem 26 sind schematisch in Figur 2 dargestellt.

Die acht Dehnungsmessstreifen 22a-d und 22e-h pro Wagen 17 sind jeweils über nicht dargestellte Kabel an die Auswerteeinheit 23 angeschlossen und sind am DG-Rahmen appliziert. Der Einfachheit halber sind die Dehnmessstreifen 22a-d und 22e-h nur angedeutet. Die Dehnmessstreifen 22a-d und 22e-h bleiben durch die Applizierung am DG-Rahmen bewegungsfrei.

Figur 2 zeigt einen schematischen Aufbau der Ausführungsvariante der Vorrichtung 16 nach Figur 1, wobei der Einfachheit halber in Figur 2 nur ein Dehnmessstreifen 22, eine Auswerteeinheit 23 und ein Display 24 gezeigt sind.

Das Dateninformationssystem 26 ist mit einer Leitstelle und/oder einer Werkstatt gekoppelt, um Daten der Auswerteeinheiten 23 an diese zu übertragen.

Über eine Dehnung ε der Konsolen, gemessen über eine Widerstandsänderung der Dehnmessstreifen 22a-d und 22e-h, wird mittels der Auswerteeinheit 23 jede einzelne Radaufstandskraft Q₁ bis Q₈ eines Wagens 17 ermittelt. Die Auswerteeinheiten 23 der einzelnen Wagen 17 verarbeiten die Signale der Dehnmessstreifen 22a-h der jeweiligen Wagen 17, rechnen die Signale um, speichern diese ab, leiten sie über die Fernübertragungseinheit 25 an das Dateninformationssystem 26 weiter und geben die umgerechneten Messsignale, wie Radaufstandskraft, Radschäden, etc. über die Ausgabeeinheit 24 aus.

Das Dateninformationssystem 26 weist vorteilhaft eine weitere Ausgabeeinheit auf, die im Führerstand des Triebwagens angeordnet ist. Auch besteht die Möglichkeit, dass das Dateninformationssystem 26 die von der Auswerteeinheit 23 ermittelten Daten an mobile Geräte wie Telefone, Tablets, etc. übermittelt.

## Patentansprüche

1. Schienenfahrzeug mit einer Vorrichtung (16) zum Messen von Radaufstandskräften (Q₁-Q₈) des Schienenfahrzeugs (17), das ein Untergestell (18) und zumindest zwei mit dem Untergestell (18) gekoppelte Drehgestelle (19) umfasst, wobei ein jedes Drehgestell (19) einen Drehgestellrahmen (27) und jeweils mindestens zwei über Primär-Federsysteme in einem Achslagergehäuse gelagerte Radachsen mit Rädern (21) aufweist, wobei die Primär-Federsysteme zwischen dem Drehgestellrahmen (27) und dem Achslagergehäuse angeordnet sind, wobei die Vorrichtung (16) eine Auswerteeinheit (23) und pro Rad (21) zumindest einen Dehnungsmessgeber (22a-d, 22e-h) aufweist, der mit der Auswerteeinheit (23) verbunden ist, **dadurch gekennzeichnet, dass** die Dehnungsmessgeber (22a-h) an für die jeweilige Radaufstandskraft des dem jeweiligen Dehnungsmessgeber (22a-h) zugeordneten Rades (21) sensitiven Stellen an dem Drehgestellrahmen (27) des jeweiligen Drehgestells (19) angebracht sind, wobei die Auswerteeinheit (23) ausgebildet ist, anhand der Messsignale der Dehnungsmessgeber (22a-h) die Aufstandskraft in jedem Rad zu ermitteln.

2. Schienenfahrzeug nach Anspruch 1, **dadurch gekennzeichnet, dass** die Auswerteeinheit (23) ausgebildet ist, aus der ermittelten Aufstandskraft in jedem Rad eine Fahrzeugentgleisung und/oder Radschäden der Räder (21) zu ermitteln.

3. Schienenfahrzeug nach einem der Ansprüche 1 oder 2, **dadurch gekennzeichnet, dass** die Auswerteeinheit (23) mit zumindest einer visuellen oder akustischen Ausgabeeinheit (24) gekoppelt ist.

4. Schienenfahrzeug nach einem der Ansprüche 1 bis 3, **dadurch gekennzeichnet, dass** das Schienenfahrzeug (17) aus einem Wagen oder aus mehreren gekoppelten Wagen besteht, wobei pro Wagen eine Auswerteinheit (23) vorgesehen ist.

5. Schienenfahrzeug nach Anspruch 4, **dadurch gekennzeichnet, dass** die Vorrichtung (16) ein Dateninformationssystem (26) aufweist, wobei das Dateninformationssystem (26) mit sämtlichen Auswerteeinheiten (23) gekoppelt ist.

## Claims

1. A rail vehicle having a device (16) for measuring wheel vertical forces (Q₁-Q₈) of the rail vehicle (17) comprising an undercarriage (18) and at least two bogies (19) coupled to the undercarriage (18), wherein each bogie (19) has a bogie frame (27) and respectively at least two wheel axles, mounted through primary spring systems in an axle bearing housing, having wheels (21), wherein the primary spring systems are arranged between the bogie frame (27) and the axle bearing housing, wherein the device (16) has an evaluation unit (23) and per wheel (21) at least one strain gauge sensor (22a-d, 22e-h), which is connected to the evaluation unit (23), **characterized in that** the strain gauge sensors (22a-h) are attached at the sensitive locations on the bogie frame (27) of the respective bogie (19), which are assigned to the respective wheel vertical force of the respective strain gauge sensor (22a-h), wherein the evaluation unit (23) is configured to determine the wheel vertical force in each wheel by way of the measurement signals of the strain gauge sensors (22a-h).

2. A rail vehicle according to claim 1, **characterized in that** the evaluation unit (23) is configured to determine from the determined vertical force in each wheel a vehicle derailment and/or wheel damage of the wheels (21).

3. A rail vehicle according to any of the claims 1 or 2, **characterized in that** the evaluation unit (23) is coupled to at least one visual or acoustic output unit (24).

4. A rail vehicle according to any of the claims 1 to 3, **characterized in that** the rail vehicle (17) is composed of a waggon or of several coupled waggons, wherein there is provided one evaluation unit (23) per waggon.

5. A rail vehicle according to claim 4, **characterized in that** the device (16) has a data information system (26), wherein the data information system (26) is coupled to all evaluation units (23).

## Revendications

1. Véhicule sur rails comprenant un dispositif (16) pour mesurer des forces d'appui au sol (Q₁-Q₈) du véhicule sur rails (17), qui comprend un châssis (18) et au moins deux bogies (19) accouplés au châssis (18), dans lequel chaque boggie (19) présente un cadre de boggie (27) et respectivement au moins deux essieux montés dans un corps de boîte d'essieu par l'intermédiaire de systèmes pneumatiques primaires avec des roues (21), dans lequel les systèmes de suspension primaires sont disposés entre le cadre de boggie (27) et le corps de boîte d'essieu, dans lequel le dispositif (16) présente une unité d'évaluation (23) et, pour chaque roue (21), au moins un capteur de déformation (22a-d, 22e-h) qui est relié à l'unité d'évaluation (23), **caractérisé en ce que** les capteurs de déformation (22a-h) sont montés sur le cadre de boggie (27) du boggie (19) respectif en des points sensibles à la force d'appui au sol respective de la roue (21) associée au capteur de déformation (22a-h) respectif, dans lequel l'unité d'évaluation (23) est conçue de manière à déterminer la force d'appui au sol dans chaque roue sur la base des signaux de mesure des capteurs de déformation (22a-h).

2. Véhicule sur rails selon la revendication 1, **caractérisé en ce que** l'unité d'évaluation (23) est conçue de manière à déterminer, à partir de la force d'appui au sol déterminée dans chaque roue, un déraillement de véhicule et/ou des endommagements de roue des roues (21).

3. Véhicule sur rails selon l'une quelconque des revendications 1 ou 2, **caractérisé en ce que** l'unité d'évaluation (23) est accouplée à au moins une unité de sortie visuelle ou acoustique (24).

4. Véhicule sur rails selon l'une quelconque des revendications 1 à 3, **caractérisé en ce que** le véhicule sur rails (17) est constitué d'un wagon ou de plusieurs wagons accouplés, dans lequel une unité d'évaluation (23) est prévue par wagon.

5. Véhicule sur rails selon la revendication 4, **caractérisé en ce que** le dispositif (16) est équipé d'un système d'informations de données (26), dans lequel le système d'informations de données (26) est accouplé à la totalité des unités d'évaluation (23).
